# FASCICULE DE BREVET EUROPEEN

(11) **EP 0 603 072 B1**
(45) Date de publication et mention de la délivrance du brevet: **20.08.1997**
(21) Numéro de dépôt: 93403048.7
(22) Date de dépôt: 16.12.1993
(51) Int. Cl.: C03C 27/04, C08G 18/10, C09J 5/02, C09J 175/04

(54) **Procédé de traitement d'un vitrage pour l'adhésion d'un profil périphérique**
Verfahren zur Behandlung einer Verglasung zum randseitigen Verkleben eines Profils
Process for the treatment of a glazing for the peripherically adhesion of a profile

(30) Priorité: 18.12.1992 FR 9215292
(43) Date de publication de la demande: 22.06.1994
(73) Titulaire: SAINT-GOBAIN VITRAGE, 92400 Courbevoie (FR)
(72) Inventeur: Drujon, Frédéric, F-60150 Machemont (FR); Daude, Gérard, F-33140 Villenave d'Ornon (FR); Gosse, Cécile, F-60200 Compiegne (FR)
(74) Mandataire: Breton, Jean-Claude

(56) Documents cités:
- EP-A- 0 040 469
- EP-A- 0 253 770
- EP-A- 0 378 462
- EP-A- 0 487 377
- DE-U- 9 202 424
- FR-A- 1 426 058
- US-A- 3 881 043
- US-A- 4 146 585

## Description

L'invention concerne un procédé de traitement d'un vitrage pour l'adhésion d'un profil périphérique et plus précisément d'un profil périphérique surmoulé (ou joint d'encapsulation). Ce traitement peut également s'appliquer pour l'adhésion sur un vitrage d'un profil déposé par extrusion.

Ce type de profil est généralement fabriqué et monté sur le vitrage par le fabricant de vitrages. Les vitrages sont ainsi livrés notamment aux constructeurs de véhicules automobiles. Ceux-ci peuvent alors les monter directement dans les baies de carrosserie, par exemple par collage.

D'autre part, il n'est pas nécessaire de rajouter un joint de finition. L'utilisation de ce type de vitrage permet de diminuer le nombre d'étapes de montage et les coûts pour le constructeur de véhicules automobiles.

Par souci de simplification, la suite de la description portera plus précisément sur un traitement pour l'adhésion de profils surmoulés ou joints d'encapsulation.

Ces joints d'encapsulation peuvent être de différentes natures. Il peut s'agir d'un profil en polyuréthane qui est obtenu par injection thermoplastique ou par injection réactive (RIM). Il peut s'agir d'un profil obtenu par injection thermoplastique d'autres matières thermoplastiques, telles que des élastomères thermoplastiques en particulier des élastomères oléfiniques ou styréniques.

Il peut également s'agir d'un profil en PVC obtenu par injection thermoplastique ou par injection sous pression réduite d'un mélange, ayant la viscosité adéquate, d'un PVC avec un catalyseur, par exemple des produits connus sous l'appellation "plastisol", qui est ensuite activé par un rayonnement électromagnétique à hautes fréquences, très hautes fréquences ou ultra-hautes fréquences.

Ce type de profil ou joint d'encapsulation est le plus souvent surmoulé sur toute la périphérie du vitrage. Lors de la réalisation de ce profil, l'adhésion obtenue avec le verre n'est pas toujours satisfaisante et peut diminuer au cours du temps.

Lorsque le collage du vitrage dans la baie de carrosserie s'effectue par dépôt d'un cordon adhésif sur le vitrage en bordure du profil surmoulé, celui-ci ne joue qu'un rôle d'étanchéité et d'esthétique.

En revanche, lorsque le cordon adhésif est déposé sur le profil surmoulé la liaison entre le vitrage et la baie de carrosserie se fait par l'intermédiaire de cette liaison entre le vitrage et le profil surmoulé, qui doit alors être très forte et durable dans le temps. De plus, elle ne suffit généralement pas à assurer une étanchéité totale. Pour ces raisons, il est préférable d'améliorer cette adhésion entre le vitrage et le profil surmoulé. Pour cela, on enduit le vitrage d'un agent d'adhérence ou solution de primage qui permet de créer une liaison plus forte entre le verre et la matière plastique.

Une telle technique est déjà utilisée notamment dans l'industrie automobile. Cette technique se compose de deux étapes. Dans un premier temps, on dépose une couche qui comporte des silanes de façon à créer un lien avec le verre puis dans un deuxième temps on dépose une solution de primage. Il est alors possible de fabriquer le profil surmoulé selon l'une des techniques énumérées précédemment. Cependant il a été observé que pour obtenir une bonne adhésion, il est nécessaire de fabriquer le profil surmoulé dans les heures qui suivent l'enduction de la solution de primage.

Dans le cas où le fabricant prévoit un stockage de durée importante des vitrages après enduction mais avant la fabrication du profil surmoulé, l'adhésion n'est obtenue que si la solution de primage est réactivée. Cela nécessite donc une étape supplémentaire avant de procéder à la fabrication du profil surmoulé.

Une autre solution consiste à stocker les vitrages avant l'enduction de la solution de primage. De cette façon, il faut toujours procéder par une étape préliminaire juste avant la fabrication du profil surmoulé mais celle-ci n'a pas déjà été faite auparavant.

L'invention a pour but un procédé de traitement d'un vitrage permettant l'adhésion d'un profil surmoulé en périphérie dudit vitrage après un stockage de longue durée entre la phase de traitement du vitrage et la phase de fabrication du profil surmoulé.

Selon l'invention, ce problème lié à un stockage de longue durée est résolu par un procédé de traitement d'un vitrage en vue d'améliorer l'adhésion d'un profil surmoulé en périphérie dudit vitrage, consistant à traiter au moins la zone périphérique d'une face du vitrage par au moins un silane et une composition comprenant essentiellement des composants polyol et isocyanate susceptible de former un polyuréthane à groupes OH libres, ledit composant polyol étant pris en excès par rapport au composant isocyanate.

Le traitement d'une seule face du vitrage peut-être suffisant, notamment dans le cas où le profil surmoulé ne couvre en partie qu'une face du vitrage. Dans le cas d'un profil surmoulé recouvrant en partie les deux faces du vitrage, il est préférable d'améliorer l'adhésion sur toute la zone de contact du profil sur le vitrage et donc de traiter les deux faces.

Selon un mode préféré de l'invention, on traite le vitrage sur les deux faces et principalement sur la périphérie.

Généralement, les vitrages destinés à être montés dans une baie de carrosserie comportent une bande émaillée sur toute leur périphérie, sur la face orientée vers l'habitacle. Cette bande émaillée sert notamment à masquer le cordon adhésif utilisé pour le montage et procure une protection au collage vis-à-vis des rayons ultra-violets.

Avantageusement, le traitement est effectué sur cette bande émaillée et sur la zone correspondante de l'autre face du vitrage.

Dans une première variante, le traitement consiste à déposer une couche à base de silanes sur laquelle on dépose et on polymérise au moins partiellement une composition susceptible de former une couche à groupes OH libres.

Dans une seconde variante, il est possible de réaliser le traitement en une seule étape. Pour cela, on introduit les silanes dans la composition qui après polymérisation partielle ou totale est susceptible de former une couche à groupes OH libres.

Les silanes sont avantageusement choisis dans les familles d'aminosilanes, de mercaptosilanes et d'isocyanatosilanes.

La polymérisation peut être réalisée par un traitement thermique à température élevée et de courte durée, par exemple à une température d'environ 80 à 120°C pendant une durée de l'ordre de une à quelques minutes.

La polymérisation peut aussi être réalisée à la température dite ambiante, c'est-à-dire d'environ 20 à 25°C mais pendant une durée beaucoup plus longue, par exemple 24 heures.

Entre ces deux types de polymérisation, il est possible d'envisager tout autre cycle de polymérisation thermique. L'avantage d'une polymérisation rapide réside essentiellement dans une plus grande facilité de manipulation d'un vitrage traité. On peut aussi utiliser le cas échéant d'autres types de polymérisation, par exemple par microondes, par catalyse en phase vapeur, par rayonnement, etc...

La composition susceptible de former une couche à groupes OH libres peut comprendre les composants de base pour former un polyuréthane à groupes OH libres, le composant polyol étant pris en excès, en terme d'équivalents par rapport au composant isocyanate, le rapport des groupes NCO aux groupes OH étant inférieur à 1, et de préférence compris entre 0,3 et 0,99.

Dans une variante, la composition de primage peut être une composition comprenant une résine époxyde à deux composants.

Dans une autre variante, la composition de primage peut être à base d'une résine polyoxazolidone obtenue par condensation d'un isocyanate sur une résine époxyde en excès, en présence d'un catalyseur de type sels d'ammonium quaternaire.

Le composant isocyanate peut être choisi parmi les isocyanates difonctionnels aliphatiques ou aromatiques tels que l'hexaméthylènediisocyanate, le 2,2,4-triméthyl -1,6-hexaméthylènediisocyanate, le bis (4-isocyanatocyclo hexyl)méthane,l'isocyanato 1, 3-isocyanatométhyl-3,5,5-triméthylcyclohexane (IPDI), le toluylène diisocyanate (TDI), les isocyanates de fonctionnalité supérieure à 2, tels les biurets d'isocyanate, les isocyanurates, le diisocyanatodiphényl-méthane partiellement polymérisé et de fonctionnalité comprise entre 2 et 3, etc...

Le composant polyol peut être formé d'au moins un polyol choisi parmi les polyols longs de masse moléculaire comprise entre 400 et 4000 environ tels que les polyétherdiols, polyesterdiols, polycaprolactonediols.

Avantageusement, le composant polyol comprend au moins un diol de masse moléculaire inférieure à 400, choisi parmi ceux utilisés généralement en tant qu'allongeur de chaîne dans la préparation des polyuréthanes : on peut citer par exemple les :
éthylèneglycol,propanediol-1,2,propanediol-1,3,butanediol-1,2,-1,3,-1,4, diméthyl-2,2 propanediol-1,3 (néopentylglycol), pentanediol-1,5,hexanediol-1,6, octanediol-1,8, décanediol, 1,10, dodécanediol-1,12,cyclohexanediméthanol, bisphénol A, méthyl-2-pentanediol- 2,4,méthyl-3 pentane diol-2,4, éthyl-2-hexanediol-1,3, triméthyl-2,2,4-pentane diol-1,3,diéthylèneglycol, triéthylèneglycol,tétraéthylène glycol,butyne-2-diol-1,4,butènediol-1,4 et décynediol substitués et/ou éthérifiés,hydroquinone-bis-hydroxyéthyléther, bisphénol A éthérifiés par deux ou quatre groupes d'oxyde de propylène, acide diméthylolpropionique.

Le composant polyol peut être formé encore d'un polyol de fonctionnalité supérieure à deux, tels des triols aliphatiques monomères comme le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Le polyol de fonctionalité supérieure à 2 peut être utilisé seul, notamment lorsque sa masse moléculaire est supérieure à environ 400. Dans une variante, il peut être utilisé en mélange avec au moins un polyol long difonctionnel et/ou avec au moins un diol court.

Une des caractéristiques essentielles de l'invention est la présence de groupes OH à la surface du profil surmoulé traité. Ces groupes OH en excès doivent être stables, c'est-à-dire qu'ils doivent demeurer réactifs pendant un stockage, même prolongé, pour pouvoir réagir ultérieurement avec des groupes NCO libres du profil surmoulé.

Le procédé de traitement du vitrage ainsi proposé est tout à fait satisfaisant pour la fabrication du profil surmoulé se faisant par RIM ou par injection thermoplastique. Le procédé est également satisfaisant dans le cas de la fabrication d'un profil surmoulé, à base d'élastomère thermoplastique, par injection thermoplastique.

Ce procédé convient également pour l'adhésion d'un profil périphérique du type polyuréthane déposé par extrusion sur le vitrage.

Cependant, lorsque l'on fabrique un profil surmoulé en PVC, il s'avère que l'adhésion n'est pas toujours idéale. En effet, il est possible que l'adhésion soit insuffisante dès les premiers temps, ou bien que l'adhésion ne se conserve pas dans le temps.

Notamment pour améliorer l'adhésion d'un profil surmoulé en PVC, dans une variante de la composition susceptible de former une couche à groupe OH libres, le composant polyol comprend au moins un copolymère de chlorure de polyvinyle (PVC) à groupements hydroxyles libres.

En tant que copolymère PVC à groupements hydroxyles, on peut utiliser des résines vinyliques présentant la structure générale suivante : 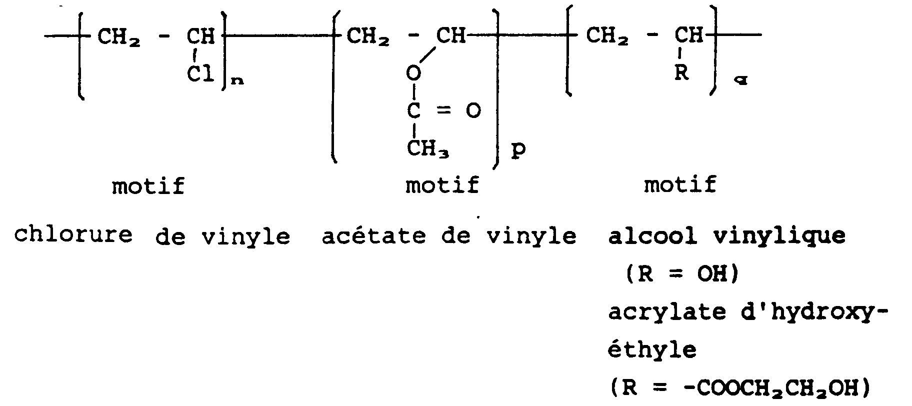 et des masses moléculaires comprises entre 2 000 et 100 000 environ et de préférence entre 5 000 et 50 000 environ, le motif chlorure de vinyle correspondant à environ 20 à 95 % en poids, le motif acétate de vinyle correspondant à environ 2 à 40 % en poids et le motif alcool vinylique ou acrylate d'hydroxyéthyle correspondant à environ 2 à 40 % en poids.

Avantageusement, le composant polyol peut comprendre, outre le copolymère du type PVC à groupements hydroxyles, au moins un autre polyol parmi ceux énoncés précédemment.

De façon préférée, le copolymère du tue PVC à groupements hydroxyles représente de 0,1 équivalent OH à 1 équivalent OH pour 1 équivalent au total du composant polyol.

La proportion entre le nombre d'équivalents OH apportés par le PVC à groupements OH (PVC-OH) et le nombre d'équivalents OH apportés par le ou les autres polyols dépend généralement de la masse moléculaire du PVC-OH utilisé.

Ainsi le nombre d'équivalents OH apportés par le PVC-OH sera généralement d'autant plus faible que sa masse moléculaire sera élevée ceci pour un pourcentage en poids de motif alcool vinyligue ou acrylate d'hydroxyéthyle donné. On peut comprendre que plus le nombre de groupes OH libres dans un PVC-OH donné est important, et plus le produit sera réactif.

Cette variante de la composition est avantageusement utilisée pour obtenir l'adhésion d'un profil surmoulé en PVC sur le vitrage, le profil surmoulé étant réalisé soit par injection thermoplastique soit par injection sous pression réduite d'un mélange ayant la viscosité adéquate, d'un PVC avec un catalyseur, par exemple des produits connus sous l'appellation "plastisol".

Cependant, cette composition, comprenant un copolymère du type PVC, peut également être utilisée pour l'adhésion d'un profil en polyuréthane réalisée par injection thermoplastique ou par injection réactive (RIM), ou pour l'adhésion d'un profil réalisé par injection thermoplastique d'autres matières thermoplastiques, telles que des élastomères thermoplastiques, ou encore pour l'adhésion d'un profil périphérique déposé par extrusion sur le vitrage.

Le procédé selon l'invention ainsi décrit, qu'il se déroule en deux étapes ou en une seule étape, dans le cas où les silanes sont introduits dans la composition susceptible de former une couche à groupes-OH libres, permet d'obtenir une bonne adhésion d'un profil surmoulé sur un vitrage, même dans le cas où le vitrage est stocké entre la phase de traitement et la phase de fabrication du profil surmoulé.

Le procédé de traitement du vitrage selon l'invention consiste à déposer les silanes et la composition de primage sur chacune des faces sur des zones destinées à être recouvertes par le profil surmoulé.

Il peut être avantageux, sur au moins la face du vitrage destinée à être orientée vers l'habitacle de ne pas se limiter à un dépôt sur cette zone qui sera recouverte par le profil surmoulé, mais de faire un dépôt sur une zone plus importante et de recouvrir au moins toute la bande émaillée qui est sur cette même face. La composition de primage restant réactive même après un long stockage, elle peut être utilisée pour le collage, sur le vitrage d'un cordon adhésif utilisé pour fixer le vitrage dans la baie de carrosserie d'un véhicule automobile.

Un autre avantage dans le cas où les silanes ne sont pas introduits dans la composition de primage, est de pouvoir utiliser les compositions de primage décrites selon l'invention pour l'adhésion d'un cordon adhésif, servant pour le montage du vitrage, sur le profil surmoulé.

Pour faciliter le dépôt et la formation de la couche de revêtement selon l'invention, on prépare généralement une solution de la composition réactionnelle destinée à former un polyuréthane à groupes OH libres. A cette fin, on ajoute un solvant, par exemple de la méthyléthylcétone ou de la méthylisobutylcétone ou d'autres cétones. La concentration de la solution du mélange réactionnel dépend de l'épaisseur désirée pour la couche de revêtement. Cette concentration est généralement comprise entre 5 et 50 % en poids.

Le dépôt de la solution sur le profil surmoulé peut s'effectuer par exemple à l'aide d'un feutre.

L'épaisseur de la couche de revêtement selon l'invention est comprise généralement entre 10 et 50 µm.

D'autres caractéristiques et avantages de l'invention apparaîtront dans la description suivante d'exemples de traitements conformes à l'invention.

### Exemple 1 :

On fabrique un vitrage encapusulé pour véhicule automobile, par exemple un vitrage de custode.

Pour cela, on enduit la zone émaillée du vitrage destinée à être recouverte par le profil, de la composition de primage. On élève ensuite la température du verre à 140°C. Puis on forme le profil surmoulé . Le profil surmoulé est réalisé par le procédé de moulage par injection réactive. Le produit utilisé est par exemple un mélange de composants aptes à former un profil ou joint en polyuréthane. L'adhésion obtenue peut être évaluée à l'aide d'un test de pelage sur une éprouvette constituée d'une languette du matériau formant le profil d'encapsulation de 2 cm de large.

Les mesures d'adhésion par pelage à 180° sont réalisées juste après fabrication. L'adhésion obtenue est Ho, exprimée en N/cm.

Une valeur de 50 N/cm est considérée corrrespondre à une bonne adhésion.

### Essai n° 1

La composition de primage utilisé est un mélange d'un composant isocyanate : le méthylène diphényldiisocyanate partiellement polymérisé et présentant une fonctionnalité comprise entre 2 et 3 et d'un composant polyol comprenant du polypropylèneglycol de masse moléculaire 440 et du butanediol -1,4.

Les composants sont pris en quantités telles qu'à 0,8 équivalent d'isocyanate correspond 1 équivalent OH dont 0,3 équivalent apporté par le polypropylèneglycol et 0,7 équivalent OH apportés par le butanediol 1,4.

La composition est associée à un silane. Le traitement se fait soit en une étape, le silane étant dans la composition de primage, soit en deux étapes consistant en un premier dépôt du silane puis un second dépôt de la composition de primage.

Les valeurs obtenues sont :
. 1 étape : Ho>50 N/cm
. 2 étapes : HO>50 N/cm

### Essai n° 2

La composition de primage utilisée est formée d'un mélange d'un composant isocyanate : le méthylène diphènyldiisocyanate partiellement polymérisé et présentant une fonctionnalité comprise entre 2 et 3, et d'un composant polyol formé essentiellement d'un PVC à terminaisons hydroxyles, de masse moléculaire 5500 environ et de formule générale : 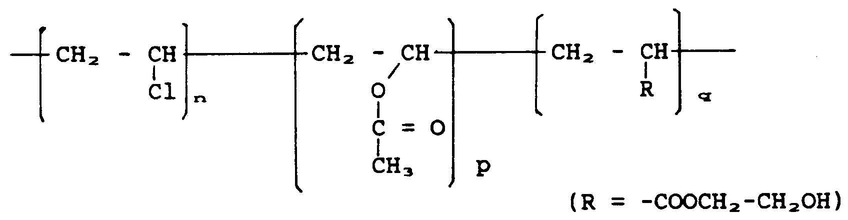 dans laquelle le motif chlorure de vinyle représente 67 % en poids environ, le motif acétate de vinyle représente 11 % en poids environ et le motif acrylate représente 22 % en poids environ.

Les composants sont pris en quantités telles qu'à 0,8 équivalent d'isocyanate correspond 1 équivalent OH.

La composition contient également du dilaurate de dibutylétain en tant que catalyseur du polyuréthane, à raison de 0,03 % du poids des composants du polyuréthane.

La compositon appliquée est de préférence sous forme d'une solution du mélange décrit ci-dessus, dans de la méthyléthylcétone, la concentration du mélange réactionnel étant d'environ 25 % en poids.

La composition est associée à un silane. Le traitement se fait soit en une étape le silane étant dans la composition de primage, soit en deux étapes consistant en un premier dépôt du silane puis un second dépôt de la composition de primage.

Les valeurs obtenues sont :
. 1 étape : Ho>80 N/cm
. 2 étapes : Ho>100 N/cm

### Exemple 2 :

Les mêmes essais ont été réalisés pour améliorer l'adhésion d'un cordon adhésif sur le verre.

Le cordon adhésif utilisé est un joint commercialisé sous l'appellation BETASEAL HV3.

### Essai n° 1

La composition de primage est celle de l'essai n° 1 de l'exemple 1.

Les valeurs obtenues sont :
. 1 étape : Ho>100 N/cm
. 2 étapes : Ho>100 N/cm

### Essai n° 2

La composition de primage est celle de l'essai n° 2 de l'exemple 1.

Les valeurs obtenues sont :
. 1 étape : Ho>100 N/cm
. 2 étapes : HO>100 N/cm

Les compositions de primage testées peuvent donc avantageusement être utilisées pour améliorer l'adhésion de profil surmoulé sur un vitrage ou bien pour améliorer l'adhésion d'un cordon adhésif sur le verre.

## Revendications

1. Procédé de traitement d'un vitrage, monolithique ou feuilleté, en vue d'améliorer l'adhésion d'un profil surmoulé en périphérie dudit vitrage, caractérisé en ce que l'on traite au moins une partie de la zone du vitrage destinée à être recouverte par le profil surmoulé par au moins un silane et une composition comprenant essentiellement des composants polyol et isocyanate susceptibles de former un polyuréthane à groupes OH libres, ledit composant polyol étant pris en excès par rapport au composant isocyanate.

2. Procédé selon la revendication 1, caractérisé en ce que le profil surmoulé est obtenu par injection thermoplastique ou injection réactive ou par injection sous pression réduite d'un mélange ayant la viscosité adéquate, d'un PVC avec un catalyseur, qui est ensuite activé par un rayonnement électromagnétique.

3. Procédé selon la revendication 1 ou 2, caractérisé en ce que l'on traite les deux faces du vitrage au moins en périphérie.

4. Procédé selon la revendication 1 à 3, caractérisé en ce que l'on traite au moins une zone des vitrages correspondant à au moins une partie d'une bande émaillée périphérique.

5. Procédé selon l'une des revendications précédentes, caractérisé en ce que l'on dépose une couche à base de silanes sur laquelle on dépose et on polymérise au moins partiellement une composition comprenant essentiellement des composants susceptibles de former un polyuréthane à groupes OH libres, le composant polyol étant pris en excès par rapport au composant isocyanate.

6. Procédé selon l'une des revendications 1 à 4, caractérisé en ce que l'on dépose et on polymérise au moins partiellement une composition comprenant essentiellement des composants susceptibles de former un polyuréthane à groupes OH libres, le composant polyol étant pris en excès par rapport au composant isocyanate, cette composition contenant des silanes.

7. Procédé selon l'une des revendications 5 ou 6, caractérisé en ce que l'on polymérise la composition par un traitement thermique.

8. Procédé selon l'une des revendications 5 ou 6, caractérisé en ce que l'on polymérise la composition à température ambiante.

9. Procédé selon l'une des revendications précédentes, caractérisé en ce qu'au moins un silane est choisi parmi les familles des aminosilanes et des isocyanatosilanes.

10. Procédé selon l'une des revendications précédentes, caractérisé en ce que le rapport des groupes NCO aux groupes OH de la composition est compris entre 0,3 et 0,99.

11. Procédé selon l'une des revendications précédentes, caractérisé en ce que le composant isocyanate de la composition est le méthylènediphényldiisocyanate.

12. Procédé selon l'une des revendications précédentes, caractérisé en ce que le composant polyol de la composition comprend au moins un polyol long.

13. Procédé selon l'une des revendications précédentes, caractérisé en ce que le composant polyol de la composition comprend au moins un diol court de masse moléculaire inférieure à 400.

14. Procédé selon l'une des revendications précédentes, caractérisé en ce que le composant polyol de la composition comprend au moins un polyol de fonctionnalité supérieure à deux.

15. Procédé selon l'une des revendications précédentes, caractérisé en ce que la composition polyol de la composition comprend au moins un copolymère de chlorure de polyvinyle à groupements hydroxyles libres.

16. Procédé selon la revendication 15, caractérisé en ce que le copolymère PVC à groupements hydroxyles présente la formule suivante : 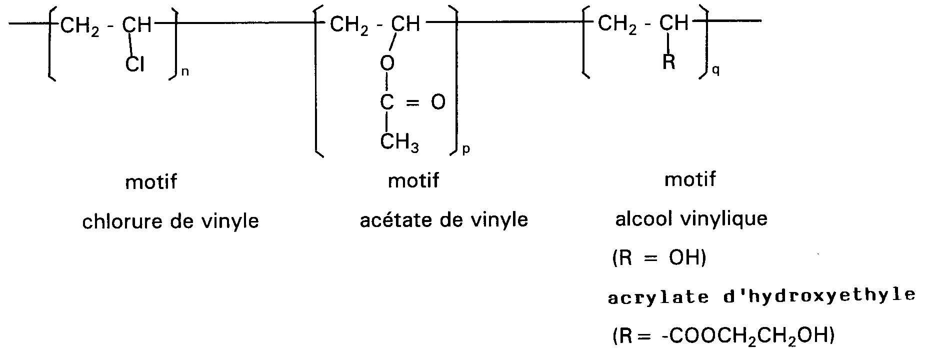 et une masse moléculaire comprise entre 1000 et 100 000 environ, et de préférence de 2000 et 50 00, le motif chlorure de vinyle correspondant à environ 20 à 95 % en poids, le motif acétate de vinyle correspondant à environ 2 à 40 % en poids et le motif alcool vinylique ou acrylate d'hydroxyéthyle correspondant à environ 2 à 40 % en poids.

17. Procédé de traitement d'un vitrage monolithique ou feuilleté, en vue d'améliorer l'adhésion d'un profil périphérique déposé par extrusion sur le vitrage, caractérisé en ce que l'on traite au moins la zone périphérique d'une face du vitrage par au moins un silane et une composition comprenant essentiellement des composants polyol et isocyanate susceptibles de former une couche à groupes OH libres, ledit composant polyol étant pris en excès par rapport au composant isocyanate.

18. Procédé de fabrication d'un vitrage muni d'un profil surmoulé, caractérisé en ce qu'avant l'opération de surmoulage on traite le vitrage par le procédé selon une des revendications 1 à 17.

19. Vitrage monolithique ou feuilleté pourvu d'un profil surmoulé, caractérisé en ce qu'il est obtenu par la mise en oeuvre du procédé selon la revendication 18.

## Claims

1. Method of treating a monolithic or laminated pane for the purpose of improving the bond of a moulded-on profile at the periphery of said pane, characterized in that at least a portion of the zone of the pane intended to be covered by the moulded-on profile is treated with at least one silane and a composition comprising, essentially, polyol and isocyanate components capable of forming a polyurethane having free OH groups, said polyol component being taken in excess with respect to the isocyanate component.

2. Method according to claim 1, characterized in that the moulded-on profile is produced by thermoplastic injection moulding or reactive injection moulding or by injection under reduced pressure of a mixture, having the appropriate viscosity, of a PVC with a catalyst, which is then activated by electromagnetic radiation.

3. Method according to claim 1 or 2, characterized in that both faces of the pane are treated, at least at the periphery.

4. Method according to claims 1 to 3, characterized in that at least one zone of the panes corresponding to at least a portion of a peripheral enamel led strip is treated.

5. Method according to one of the preceding claims, characterized in that a film based upon silanes is deposited, on which there is deposited and polymerized, at least partially, a composition comprising essentially components capable of forming a polyurethane having free OH groups, the polyol component being taken in excess with respect to the isocyanate component.

6. Method according to one of claims 1 to 4, characterized in that there is deposited and polymerized, at least partly, a composition comprising essentially components capable of forming a polyurethane having free OH groups, the polyol component being taken in excess with respect to the isocyanate component, this composition containing silanes.

7. Method according to `one of claims 5 or 6, characterized in that the composition is polymerized by a heat treatment.

8. Method according to one of claims 5 or 6, characterized in that the composition is polymerized at ambient temperature.

9. Method according to one of the preceding claims, characterized in that at least one silane is chosen from among the families of the aminosilanes and the isocyanatosilanes.

10. Method according to one of the preceding claims, characterized in that the ratio of the NCO groups to the OH groups in the composition lies between 0.3 and 0.99.

11. Method according to one of the preceding claims, characterized in that the isocyanate component of the composition is methylene diphenyl diisocyanate.

12. Method according to one of the preceding claims, characterized in that the polyol component of the composition comprises at least one long polyol.

13. Method according to one of the preceding claims, characterized in that the polyol component of the composition comprises at least one short diol of molecular mass less than 400.

14. Method according to one of the preceding claims, characterized in that the polyol component of the composition comprises at least one polyol having a functionality greater than two.

15. Method according to one of the preceding claims, characterized in that the polyol component of the composition comprises at least one polyvinyl chloride copolymer having free hydroxyl groups.

16. Method according to claim 15, characterized in that the PVC copolymer having hydroxyl groups has the following formula: 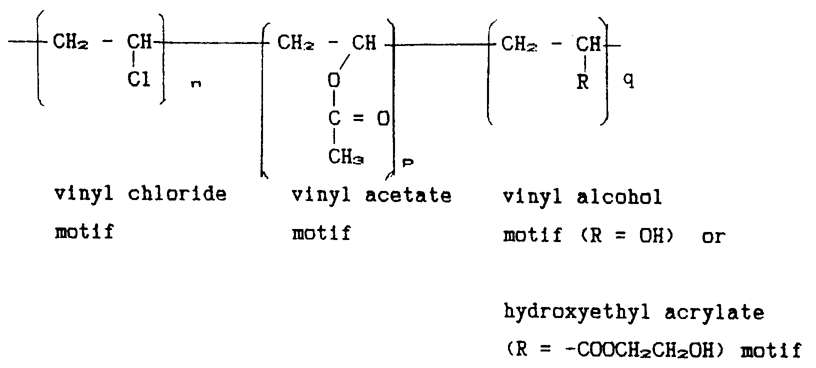 and a molecular mass lying between 1000 and 100,000 approximately, and preferably from 2000 to 5000, the vinyl chloride motif corresponding to approximately 20 to 95% by weight, the vinyl acetate motif corresponding to approximately 2 to 40% by weight and the vinyl alcohol motif or hydroxyethyl acrylate motif corresponding to approximately 2 to 40% by weight.

17. Method of treating a monolithic or laminated pane for the purpose of improving the bond of a peripheral profile deposited by extrusion onto the pane, characterized in that at least the peripheral zone of one face of the pane is treated with at least one silane and a composition comprising, essentially, polyol and isocyanate components capable of forming a film having free OH groups, said polyol component being taken in excess with respect to the isocyanate component.

18. Method of producing a pane provided with a moulded-on profile, characterized in that, before the moulding-on operation, the pane is treated by the method according to one of claims 1 to 17.

19. Monolithic or laminated pane provided with a moulded-on profile, characterized in that it is produced by the execution of the method according to claim 18.

## Patentansprüche

1. Verfahren zur Behandlung einer Einscheiben- oder Verbundverglasung, um das Anhaften eines an ihrem Umfang aufgeformten Profils zu verbessern, **dadurch gekennzeichnet, daß** wenigstens ein Teil des Bereichs der Verglasung, der durch das aufgeformte Profil beschichtet werden soll, mit mindestens einem Silan und einer Zusammensetzung behandelt wird, welche im wesentlichen eine Polyol- und eine Isocyanatkomponente umfaßt, die in der Lage sind, ein Polyurethan mit freien OH-Gruppen zu bilden, wobei die Polyolkomponente in bezug auf die Isocyanatkomponente im Überschuß vorliegt.

2. Verfahren nach Anspruch 1, **dadurch gekennzeichnet, daß** das aufgeformte Profil durch thermoplastisches Spritzgießen, Reaktionsspritzgießen oder Spritzgießen unter Unterdruck eines Gemischs erhalten wird, das die entsprechende Viskosität besitzt und aus einem PVC mit einem Initiator besteht, der anschließend durch elektromagnetische Strahlung aktiviert wird.

3. Verfahren nach Anspruch 1 oder 2, **dadurch gekennzeichnet, daß** wenigstens der Umfang der beiden Seiten der Verglasung behandelt wird.

4. Verfahren nach Anspruch 1 bis 3, **dadurch gekennzeichnet, daß** wenigstens ein Bereich der Verglasungen behandelt wird, der mindestens einem Teil eines umfänglichen Emailbandes entspricht.

5. Verfahren nach einem der vorhergehenden Ansprüche, **dadurch gekennzeichnet, daß** eine Schicht auf der Grundlage von Silanen aufgetragen wird, auf welcher eine Zusammensetzung aufgebracht und wenigstens teilweise polymerisiert wird, welche im wesentlichen Komponenten umfaßt, die in der Lage sind, ein Polyurethan mit freien OH-Gruppen zu bilden, wobei die Polyolkomponente in bezug auf die Isocyanatkomponente im Überschuß vorliegt.

6. Verfahren nach einem der Ansprüche 1 bis 4, **dadurch gekennzeichnet, daß** eine Zusammensetzung aufgebracht und wenigstens teilweise polymerisiert wird, welche im wesentlichen Komponenten umfaßt, die in der Lage sind, ein Polyurethan mit freien OH-Gruppen zu bilden, wobei die Polyolkomponente in bezug auf die Isocyanatkomponente im Überschuß vorliegt und die Zusammensetzung Silane enthält.

7. Verfahren nach Anspruch 5 oder 6, **dadurch gekennzeichnet, daß** die Zusammensetzung durch eine thermische Behandlung polymerisiert wird.

8. Verfahren nach Anspruch 5 oder 6, **dadurch gekennzeichnet, daß** die Zusammensetzung bei Umgebungstemperatur polymerisiert wird.

9. Verfahren nach einem der vorhergehenden Ansprüche, **dadurch gekennzeichnet, daß** mindestens ein Silan aus der Gruppe der Silylamine und Isocyanatosilane ausgewählt ist.

10. Verfahren nach einem der vorhergehenden Ansprüche, **dadurch gekennzeichnet, daß** das Verhältnis der NCO-Gruppen zu den OH-Gruppen der Zusammensetzung 0,3 bis 0,99 beträgt.

11. Verfahren nach einem der vorhergehenden Ansprüche, **dadurch gekennzeichnet, daß** die Isocyanatkomponente der Zusammensetzung Methylendiphenyldiisocyanat ist.

12. Verfahren nach einem der vorhergehenden Ansprüche, **dadurch gekennzeichnet, daß** die Polyolkomponente der Zusammensetzung mindestens ein langes Polyol enthält.

13. Verfahren nach einem der vorhergehenden Ansprüche, **dadurch gekennzeichnet, daß** die Polyolkomponente der Zusammensetzung mindestens ein kurzes Polyol mit einer Molmasse von unter 400 enthält.

14. Verfahren nach einem der vorhergehenden Ansprüche, **dadurch gekennzeichnet, daß** die Polyolkomponente der Zusammensetzung mindestens ein Polyol mit einer Funktionalität von größer als zwei enthält.

15. Verfahren nach einem der vorhergehenden Ansprüche, **dadurch gekennzeichnet, daß** die Polyolkomponente der Zusammensetzung mindestens ein Polyvinylchlorid-Copolymer mit freien Hydroxylgruppen enthält.

16. Verfahren nach Anspruch 15, **dadurch gekennzeichnet, daß** das PVC-Copolymer mit Hydroxylgruppen folgende Formel 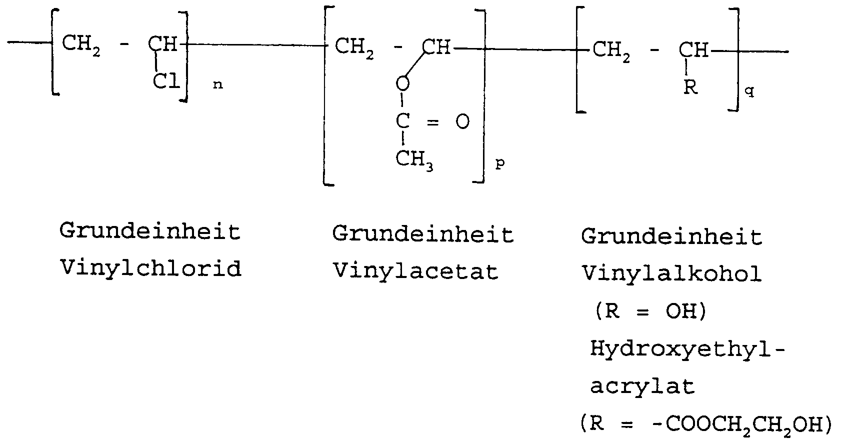 und eine Molmasse von etwa 1 000 bis 100 000 und vorzugsweise von 2 000 bis 50 00 besitzt, wobei die Vinylchlorid-Grundeinheiten etwa 20 bis 95 Gew.-%, die Vinylacetat-Grundeinheiten etwa 2 bis 40 Gew.% und die Vinylalkohol- oder Hydroxyethylacrylat-Grundeinheiten etwa 2 bis 40 Gew.-% ausmachen.

17. Verfahren zur Behandlung einer Einscheiben- oder Verbundverglasung, um das Anhaften eines Umfangsprofils zu verbessern, das durch Extrudieren auf der Verglasung aufgebracht worden ist, **dadurch gekennzeichnet, daß** wenigstens der Umfangsbereich einer Seite dieser Verglasung mit mindestens einem Silan und einer Zusammensetzung behandelt wird, welche im wesentlichen eine Polyol- und eine Isocyanatkomponente umfaßt, die in der Lage sind, eine Schicht mit freien OH-Gruppen zu bilden, wobei die Polyolkomponente in bezug auf die Isocyanatkomponente im Überschuß vorliegt.

18. Verfahren zur Herstellung einer mit einem aufgeformten Profil versehenen Verglasung, **dadurch gekennzeichnet, daß** vor dem Aufformungsvorgang die Verglasung durch das Verfahren nach einem der Ansprüche 1 bis 17 behandelt wird.

19. Einscheiben- oder Verbundverglasung, die mit einem aufgeformten Profil versehen ist, **dadurch gekennzeichnet, daß** sie mittels Durchführung des Verfahrens nach Anspruch 18 hergestellt wird.
